(19) Europäisches Patentamt European Patent Office Office européen des brevets

(11) EP 1 852 456 B1

(12) # EUROPÄISCHE PATENTSCHRIFT

(45) Veröffentlichungstag und Bekanntmachung des Hinweises auf die Patenterteilung:
**17.06.2009 Patentblatt 2009/25**

(51) Int Cl.:
***C08G 77/388*** *(2006.01)* ***C08G 77/26*** *(2006.01)*
***C07F 7/08*** *(2006.01)*

(21) Anmeldenummer: **07106503.1**

(22) Anmeldetag: **19.04.2007**

(54) **Verfahren zur Herstellung von ß-Ketocarbonyl-funktionellen Organosiliciumverbindungen**

Process for preparing ß-ketocarbonyl-functional organosilicon compounds

Procédé pour la préparation de composés organosiliciques ß-cetocarbonyl-fonctionnalisé

(84) Benannte Vertragsstaaten:
**BE DE FR GB NL**

(30) Priorität: **04.05.2006 DE 102006020815**

(43) Veröffentlichungstag der Anmeldung:
**07.11.2007 Patentblatt 2007/45**

(73) Patentinhaber: **Wacker Chemie AG**
**81737 München (DE)**

(72) Erfinder: **Herzig, Christian**
**83329, Waging am See (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**WO-A-20/07060089** **US-A- 4 808 649**
**US-A- 5 952 443** **US-A- 6 121 404**

EP 1 852 456 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Herstellung von β-Ketocarbonyl-funktionellen Organosiliciumverbindungen. Weiterhin betrifft die Erfindung β-Ketocarbonyl-funktionelle Organosiliciumverbindungen.

In US 4,861,839 werden Alkoxysilane beschrieben, die mit Acetessig(thio)ester- oder Acetessigamidogruppen substituiert sind und als monomere Chelatliganden für Metallkatalysatoren verwendet werden.

Polymere β-Ketoestersiloxane sind aus US 4,808,649 bekannt, ebenso ein Verfahren zu deren Herstellung sowie deren Verwendung als Stabilisator für Polyvinylchlorid.

Funktionelle Polysiloxane, die Acetoacetatgruppen enthalten werden in US 5,952,443 beschrieben, wobei ein Teil der funktionellen Gruppen mindestens zwei β-Ketocarbonylgruppen pro funktioneller Gruppe enthalten muss und die Anzahl der Dimethylsiloxyeinheiten nicht höher als 50 ist. Weithin ist die Vernetzung mit Polyaminen in Lackformulierungen beschrieben.

Die Modifizierung von Carbinol- oder Aminopolysiloxanen mit Diketen und dessen Derivaten wird in US 6,121,404 beschrieben. Die Produkte werden in wässriger Lösung zusammen mit Aminopolysiloxanen zur Herstellung von Elastomerfilmen verwendet.

Es bestand die Aufgabe ein Verfahren zur Herstellung von β-Ketocarbonyl-funktionellen Organosiliciumverbindungen bereitzustellen, bei dem unvergelte Produkte erhalten werden. Die Aufgabe wird durch die Erfindung gelöst.

Gegenstand der Erfindung ist ein Verfahren zur Herstellung von β-Ketocarbonyl-funktionellen Organosiliciumverbindungen, indem in einer 1. Stufe

(1) Organosiliciumverbindungen, die mindestens einen SiC-gebundenen organischen Rest mit einer primären Aminogruppe enthalten, mit
(2) organischen Ester-Verbindungen, vorzugsweise cyclischen organischen Carbonaten und Lactonen, die eine Gruppe der Formel

$$-O-C(=O)-$$

enthalten, umgesetzt werden
und in einer 2. Stufe
die in der 1. Stufe erhaltenen Umsetzungsprodukte aus (1) und (2) anschließend mit (3) Diketenen oder Diketenderivaten

umgesetzt werden.

Als Organosiliciumverbindungen (1) werden vorzugsweise solche, die mindestens einen SiC-gebundenen organischen Rest **A** der allgemeinen Formel

$$-R^1(-NR^2-R^1)_x-NH_2 \qquad (I),$$

enthalten, wobei

$R^1$ einen zweiwertigen organischen Rest mit 1 bis 18 Kohlenstoffatomen, vorzugsweise einen zweiwertigen Kohlenwasserstoffrest mit 1 bis 18 Kohlenstoffatomen bedeutet,
$R^2$ ein Wasserstoffatom oder einen einwertigen organischen Rest mit 1 bis 18 Kohlenstoffatomen, vorzugsweise ein Wasserstoffatom oder einen einwertigen Kohlenwasserstoffrest mit 1 bis 18 Kohlenstoffatomen, bevorzugt ein Wasserstoffatom bedeutet,
x 0 oder eine ganze Zahl von 1 bis 10, vorzugsweise 0, 1 oder 2 ist,

eingesetzt.

Die Organosiliciumverbindungen (1) können monomer, oligomer oder polymer sein und können lineare, verzweigte oder cyclische Struktur haben.

Bevorzugt werden als Organosiliciumverbindungen (1) Organopolysiloxane aus Einheiten der allgemeinen Formel

$$A_aR_b(OR^3)_cSiO_{\frac{4-(a+b+c)}{2}} \qquad (II),$$

wobei

A die oben dafür angegebene Bedeutung hat,
R einen einwertigen, gegebenenfalls substituierten Kohlenwasserstoffrest mit 1 bis 18 Kohlenstoffatomen je Rest bedeutet,
$R^3$ ein Wasserstoffatom oder einen Alkylrest mit 1 bis 8 Kohlenstoffatomen, bevorzugt ein Wasserstoffatom oder einen Methyl- oder Ethylrest bedeutet,
a 0 oder 1,
b 0, 1, 2 oder 3 und
c 0 oder 1 ist,

mit der Maßgabe, dass die Summe a+b+c≤3 ist und durchschnittlich mindestens ein Rest A je Molekül enthalten ist, eingesetzt.

Bevorzugte Beispiele für Organosiliciumverbindungen (1) sind Organopolysiloxane der allgemeinen Formel

$$A_gR_{3-g}SiO\ (SiR_2O)_1(SiRAO)_kSiR_{3-g}A_g \qquad (IIIa)$$

und

$$(R^3O)R_2SiO(SiR_2O)_n(SiRAO)_mSiR_2(OR^3) \qquad (IIIb),$$

wobei A, R und $R^3$ die oben dafür angegebene Bedeutung haben,

g 0 oder 1,
k 0 oder eine ganze Zahl von 1 bis 30 ist und
l 0 oder eine ganze Zahl von 1 bis 1000 ist,
m eine ganze Zahl von 1 bis 30 ist und
n 0 oder eine ganze Zahl von 1 bis 1000 ist,

mit der Maßgabe, dass durchschnittlich mindestens ein Rest A je Molekül enthalten ist.

Beispiele für Reste R sind sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^1$ sind Alkylenreste mit 1 bis 18 Kohlenstoffatomen, wie Reste der Formel $-CH_2-$, $-CH_2CH_2-$, $-CH(CH_3)-$, $-CH_2CH_2CH_2-$, $-CH_2C(CH_3)H-$, $-CH_2CH_2CH_2CH_2-$, $-CH_2CH_2CH(CH_3)-$, wobei $-CH_2CH_2-$ und $-CH_2CH_2CH_2-$ bevorzugt sind.

Beispiele für Reste A sind
$-CH_2-NH_2$
$-CH(CH_3)-NH_2$
$-C(CH_3)_2-NH_2$
$-CH_2CH_2-NH_2$
$-CH_2CH_2CH_2-NH_2$
$-CH_2CH_2CH_2CH_2-NH_2$
$-CH_2CH_2CH(CH_3)-NH_2$
$-CH_2CH_2CH_2-NH-CH_2CH_2-NH_2$
$-CH_2CH_2CH_2-N(CH_3)-CH_2CH_2-NH_2$
$-CH_2CH_2CH_2[-NH-CH_2CH_2]_2-NH_2$
$-CH_2CH_2C(CH_3)_2CH_2-NH_2$.

Beispiele für Kohlenwasserstoffreste R gelten auch für Kohlenwasserstoffreste $R^2$.

Beispiele für Alkylreste $R^3$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.

Die bei dem erfindungsgemäßen Verfahren eingesetzten Organosiliciumverbindungen (1) weisen vorzugsweise eine Viskosität von 1 mPa.s bis 1 000 000 mPa.s bei 25°C, bevorzugt 100 mPa.s bis 50 000 mPa.s bei 25°C auf und haben ein Molekulargewicht $M_n$ von vorzugsweise 200 bis 200 000 Dalton, bevorzugt 2 000 bis 50 000 Dalton.

Die Organosiliciumverbindungen (1) enthalten primäre und gegebenenfalls sekundäre Aminogruppen in titrierbaren Mengen von 0,01 bis 12 mεqu./g, besonders bevorzugt im Bereich von 0,05 bis 3 mεqu./g Organosiliciumverbindung (1).

Es kann eine Art von Organsiliciumverbindungen (1) oder mehrere Arten von Organsiliciumverbindungen (1) eingesetzt werden.

Die organischen Ester-Verbindungen (2) enthalten vorzugsweise eine Gruppe der Formel -O-C(=O)-.

Bevorzugt werden als organische Ester-Verbindungen (2) Lactone oder Cyclocarbonate der allgemeinen Formel

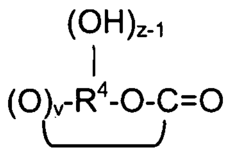

(V),

wobei $R^4$ einen zwei- oder dreiwertigen Kohlenwasserstoffrest mit 1 bis 18 Kohlenstoffatomen, der gegebenenfalls durch ein oder mehrere separate Sauerstoffatome unterbrochen ist, vorzugsweise einen zweiwertigen Kohlenwasserstoffrest mit 1 bis 5 Kohlenstoffatomen bedeutet,
v 0 oder 1, vorzugsweise 1 ist,
z 1 oder 2, vorzugsweise 1 ist,

eingesetzt.

Beispiele für zweiwertige Reste $R^4$ mit v = 0 und z = 1 in Formel (V), also Lactone, sind solche der Formel $-CH_2CH_2-$, $-CH_2CH_2CH_2-$, $-CH_2CH_2CH_2CH_2-$ und $-CH_2CH_2CH_2CH_2CH_2-$.

Beispiele für zweiwertige Reste $R^4$ mit v = 1 und z = 1 in Formel (V), also Cyclocarbonate, sind solche der Formel $-CH_2CH_2-$, $-CH_2CH_2CH_2-$, $-CH_2C(CH_3)H-$ und $-C(CH_3)HCH_2-$, und Beispiele für dreiwertige Reste $R^4$ mit v = 1 und z = 2 in Formel (V), also wenn Reste $R^4$ durch eine Hydroxylgruppe substituiert sind, solche der Formel $-CH_2C(CH_2-)H-$ und $-C(CH_2-)HCH_2-$.

Beispiele für organische Ester-Verbindungen (2) sind Propiolacton, Butyrolacton, Caprolacton, Ethylencarbonat, Propylencarbonat, Butylencarbonat und Glycerincarbonat.

Prinzipiell können zur Umsetzung von Organosiliciumverbindungen (1) auch offenkettige Ester wie Alkylester von Hydroxysäuren eingesetzt werden, die cyclischen Ester sind vor diesen aber bevorzugt, wobei Cyclocarbonate besonders bevorzugt sind.

Die Ester-Verbindungen (2) werden bevorzugt in etwa stöchiometrischer Menge bezogen auf die Summe aller vorhandenen primären Aminogruppen in (1) eingesetzt.
Bei dem erfindungsgemäßen Verfahren werden Ester-Verbindungen (2) daher vorzugsweise in Mengen von 1,0 bis 2,0 Mol, bevorzugt 1,0 bis 1,2 Mol, je Mol primäre Aminogruppe $-NH_2$ in Organosiliciumverbindungen (1) eingesetzt.

Die 1. Stufe des erfindungsgemäßen Verfahrens, die Umsetzung von (1) mit (2), wird vorzugsweise bei einer Temperatur von 10 bis 120°C, bevorzugt 25 bis 80°C, durchgeführt. Wenn die Ester-Verbindungen (2) in den Organosiliciumverbindungen (1) nicht oder nur wenig löslich sind ist eine höhere Umsetzungstemperatur von 50 bis 100°C bevorzugt.
Der Reaktionsfortschritt in der 1. Stufe des erfindungsgemäßen Verfahrens lässt sich am Aufklaren einer zunächst trüben Mischung erkennen.

Als Umsetzungsprodukte aus (1) und (2) werden in der 1. Stufe des erfindungsgemäßen Verfahrens vorzugsweise Organosiliciumverbindungen erhalten, die mindestens einen SiC-gebundenen organischen Rest **B** der allgemeinen Formel

$$-R^1(-NR^2-R^1)_x-NH-C(=O)-(O)_v-R^4(-OH)_z \qquad (VI),$$

enthalten, wobei

$R^1$, $R^2$, $R^4$, v und x die oben dafür angegebene Bedeutung haben und z 1 oder 2, vorzugsweise 1, ist.

Der Rest B enthält durch die Umsetzung von (1) mit (2) Urethancarbinolgruppen.

In der 2. Stufe des erfindungsgemäßen Verfahrens werden als Diketene (3) vorzugsweise solche der allgemeinen Formel

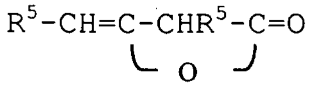 (VII),

wobei

$R^5$ ein Wasserstoffatom oder einen Kohlenwasserstoffrest mit 1 bis 18 Kohlenstoffatomen, vorzugsweise ein Wasserstoffatom, bedeutet, eingesetzt.

Beispiele für Kohlenwasserstoffreste R gelten auch für Kohlenwasserstoffreste $R^5$.

Bevorzugt wird Diketen der Formel

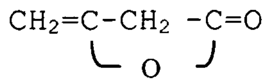

eingesetzt.

Es können auch Diketenderivate, wie Diketen-Aceton-Addukt oder t-Butylacetoacetat, eingesetzt werden, die bei erhöhter Temperatur wieder Diketen freisetzen.

In der 2. Stufe des erfindungsgemäßen Verfahrens kann die Menge an Diketenen (3) mit der die Umsetzungsprodukte aus (1) und (2) umgesetzt werden in weiten Grenzen gewählt werden. Enthalten die Organosiliciumverbindungen (1) neben primären Aminogruppen auch sekundäre Aminogruppen so werden vorzugsweise mindestens die diesen primären und sekundären Aminogruppen equivalenten Mengen an Diketenen (3) eingesetzt.
Die aus der Umsetzung von (1) mit (2) gebildeten Carbinolgruppen können ganz oder teilweise mit Diketenen (3) umgesetzt werden. Dazu kann ein leichter Überschuss von Diketenen (3) von Vorteil sein, der nach beendeter Umsetzung vorzugsweise im Vakuum wieder entfernt (flüchtiges Diketen) oder anderweitig abreagiert wird.
In der 2. Stufe des erfindungsgemäßen Verfahrens werden daher Diketene (3) vorzugsweise in Mengen von 0,5 bis 1,25 Mol, bevorzugt 0,8 bis 1,1 Mol, je Mol der Summe aus sekundären Aminogruppen (sekundäre -NH-) und Carbinolgruppe in den Umsetzungsprodukten aus (1) und (2) eingesetzt.
Eine besondere Ausführung der Erfindung ist der gleichmolare Einsatz von Diketen und Amino- und Carbinolgruppen, d.h. Diketen (3) wird besonders bevorzugt in Mengen von ca. 1,0 Mol je Mol sekundäre Aminogruppe und Carbinolgruppe in den Umsetzungsprodukten aus (1) und (2) eingesetzt.

In der 2. Stufe des erfindungsgemäßen Verfahrens läuft die Umsetzung von Diketenen (3) mit den sekundären Aminogruppen im Umsetzungsprodukt von (1) mit (2) vorzugsweise spontan bei Umgebungstemperatur ab, kann aber auch bei erhöhten Temperaturen durchgeführt werden. Zur Umsetzung der Urethancarbinolgruppen im Umsetzungsprodukt von (1) mit (2) mit Diketenen (3) ist allerdings erhöhte Temperatur erforderlich; die Umsetzung wird daher vorzugsweise bei einer Temperatur von 50 bis 120°C durchgeführt.

Die Umsetzung mit Diketenen (3) in der 2. Stufe des erfindungsgemäßen Verfahrens wird vorzugsweise in Gegenwart von basischen Katalysatoren, wie tert. Aminen, durchgeführt. Beispiele für tert. Amine sind Triethylamin, Trinonylamin, tris-(Isotridecylamin), Diazabicyclooctan, Tetramethylethylendiamin, Pentamethyldiethylentriamin, Pentamethyldipropylentriamin und bis-(Dimethylaminopropyl)aminoethanol.

Das erfindungsgemäße Verfahren wird vorzugsweise beim Druck der umgebenden Atmosphäre, also etwa bei 1020 hPa, durchgeführt, es kann aber auch bei höheren oder niedrigeren Drücken durchgeführt werden.

Das erfindungsgemäße Verfahren kann diskontinuierlich, halbkontinuierlich oder kontinuierlich durchgeführt werden.

Die Herstellung der erfindungsgemäßen β-Ketocarbonylfunktionellen Organosiliciumverbindungen kann in organischen Lösungsmitteln erfolgen, insbesondere bei hohen Viskositäten der erfindungsgemäßen Organosiliciumverbindungen kann dies vorteilhaft sein. Beispiele für Lösungsmittel sind gesättigte Kohlenwasserstoffe, wie n-Pentan, n-Hexan, n-Heptan und n-Octan, und deren verzweigte Isomeren, Benzine, z. B. Alkangemische mit einem Siedebereich von 80°C bis 140°C bei 1020 hPa, ungesättigte Kohlenwasserstoffe wie 1-Hexen, 1-Hepten, 1-Octen und 1-Decen, aromatische Kohlenwasserstoffe wie Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Alkohole, wie Methanol, Ethanol, n-Propanol und iso-Propanol, und niedermolekulare lineare und cyclische Organopolysiloxane.

Für den Fall, dass $R^2$ gleich Wasserstoff in den Organosiliciumverbindungen (1) ist, werden bei dem erfindungsgemäßen Verfahren als Reaktionsprodukte vorzugsweise β-Ketocarbonyl-funktionelle Organosiliciumverbindungen erhalten, die mindestens einen SiC-gebundenen organischen Rest **$G^1$** der allgemeinen Formel

$$-R^1\{-N[C(=O)-CHR^5-C(=O)-CH_2R^5]-R^1\}_x-NH-C(=O)-(O)_v-R^4\{-O[-C(=O)-CHR^5-C(=O)-CHR^5]_y-H\}_z \quad \text{(VIII)},$$

enthalten, wobei

$R^1$, $R^4$, $R^5$, v und x die oben dafür angegebene Bedeutung haben, y 0 oder 1, bevorzugt 1 ist,
z 1 oder 2, bevorzugt 1 ist,

mit der Maßgabe, dass bei mindestens einem Teil der β-Ketocarbonyl-funktionellen Organosiliciumverbindungen y gleich 1 ist.

Für den Fall, dass $R^2$ kein Wasserstoffatom sondern ein organischer Rest mit 1 bis 18 Kohlenstoffatomen in den Organosiliciumverbindungen (1) ist, werden bei dem erfindungsgemäßen Verfahren als Reaktionsprodukte vorzugsweise β-Ketocarbonyl-funktionelle Organosiliciumverbindungen erhalten, die mindestens einen SiC-gebundenen organischen Rest **$G^2$** der allgemeinen Formel

$$-R^1(-NR^{2'}-R^1)_x-NH-C(=O)-(O)_v-R^4\{-O[-C(=O)-CHR^5-C(=O)-CHR^5]_y-H\}_z \quad \text{(IX)},$$

enthalten, wobei

$R^1$, $R^4$, $R^5$, v, x, y und z die oben dafür angegebene Bedeutung haben,
$R^{2'}$ die Bedeutung von $R^2$ hat mit der Maßgabe, dass $R^{2'}$ kein Wasserstoffatom ist,

mit der Maßgabe, dass bei mindestens einem Teil der β-Ketocarbonyl-funktionellen Organosiliciumverbindungen y gleich 1 ist.

Beispiele für Reste $R^2$ gelten im vollen Umfang für Reste $R^{2'}$ außer dass $R^{2'}$ kein Wasserstoffatom bedeutet.

Vorzugsweise ist bei mindestens 80 Mol-%, bevorzugt bei mindestens 90 Mol-% der β-Ketocarbonyl-funktionellen Organosiliciumverbindungen y gleich 1.

Bei dem erfindungsgemäßen Verfahren werden bevorzugt als Reaktionsprodukte β-Ketocarbonyl-funktionelle Organopolysiloxane aus Einheiten der allgemeinen Formel

$$G_aR_b(OR^3)_cSiO_{\frac{4-(a+b+c)}{2}} \quad \text{(X)},$$

wobei

G ein Rest ausgewählt aus der Gruppe der Reste $G^1$ und $G^2$ ist, wobei $G^1$ und $G^2$ die oben dafür angegebene Bedeutung haben,
R, $R^3$, a, b und c die oben dafür angegebene Bedeutung haben, mit der Maßgabe, dass die Summe $a+b+c \leq 3$ ist und

durchschnittlich mindestens ein Rest G je Molekül enthalten ist,
erhalten.

Bevorzugte Beispiele für β-Ketocarbonyl-funktionelle Organopolysiloxane sind Organopolysiloxane der allgemeinen Formel

$$G_gR_{3-g}SiO(SiR_2O)_1(SiRGO)_kSiR_{3-g}G_g \quad \text{(IIIa)}$$

und

$$(R^3O)R_2SiO(SiR_2O)_n(SiRGO)_mSiR_2(OR^3) \quad \text{(IIIb)},$$

wobei G, R und $R^3$ die oben dafür angegebene Bedeutung haben,
g 0 oder 1,
k 0 oder eine ganze Zahl von 1 bis 30 ist und

l 0 oder eine ganze Zahl von 1 bis 1000 ist,
m eine ganze Zahl von 1 bis 30 ist und
n 0 oder eine ganze Zahl von 1 bis 1000 ist,

mit der Maßgabe, dass durchschnittlich mindestens ein Rest G je Molekül enthalten ist.

Die nach dem erfindungsgemäßen Verfahren erhaltenen β-Ketocarbonyl-funktionelle Organosiliciumverbindungen weisen haben ein Molekulargewicht $M_n$ von vorzugsweise 400 bis 200 000 Dalton, bevorzugt 2 000 bis 100 000 Dalton.

Beispiel 1:

200 g eines α, ω-Bis(aminopropyl)polydimethylsiloxans mit einem Gehalt an prim. Aminogruppen von 0,353 mεqu./g werden zusammen mit 8,08 g Ethylencarbonat bei 70°C 3 Stunden gerührt, wobei die anfangs trübe Mischung klar wird. Bei gleicher Temperatur werden nun 5,94 g Diketen zudosiert, was der Menge der eingesetzten primären Aminogruppen entspricht. Danach wird das Reaktionsgemisch mit 0,04 g einer 10 %igen Lösung von Diazabicyclooctan in Diethylenglycolmonobutylether katalysiert. Die Acetoacetylierung setzt mit leichter Exothermie ein. Nach weiteren 2 Stunden ist im IR-Spektrum kein Diketen mehr nachweisbar. Das Reaktionsgemisch wird abgekühlt. Man erhält ein klares, gelbliches Öl mit einer Viskosität von 554 $mm^2/s$ (25 °C). Amingruppen können nicht mehr nachgewiesen werden (< 0,001 mεqu./g). Das $^1H$-NMR-Spektrum bestätigt die quantitativ erhaltenen Acetylacetoxyethylurethangruppen. Das Produkt enthält ca. 0,8 Gew.-% unverbrauchtes Ethylencarbonat, welches im Vakuum bei 120°C entfernt werden kann.

Beispiel 2:

200 g eines Copolymerisats aus Aminoethylaminopropylmethylsiloxy- und Dimethylsiloxyeinheiten, überwiegend Methoxyendgruppen und einem Gesamtamingehalt von 0,297 mεqu./g bei einer Viskosität von 1120 $mm^2/s$ (25°C) werden mit 2,62 g Ethylencarbonat 2 Stunden lang unter gutem Rühren bei 80°C gehalten. Es erfolgt Aufklaren der zunächst milchigen Reaktionsmischung. Ein $^1H$-NMR-Spektrum der Zwischenstufe zeigt die quantitative Umsetzung der prim. Aminogruppen zu 2-Hydroxyethylurethangruppen. Es werden nun 4,99 g Diketen, entsprechend der gleichmolaren Menge der Summe aus Carbinol- und sekundären Aminogruppen, zudosiert, worauf schnell eine exotherme Reaktion einsetzt. Danach werden noch 0,04 g einer 10%-igen Lösung von Diazabicyclooctan in Diethylenglycolmonobutylether zugegeben und weitere 2 Stunden bei 80°C gerührt, wonach das Diketen vollständig verbraucht ist. Nach Abkühlung des Ansatzes erhält man ein farbloses, klares Öl mit einer Viskosität von 30 500 $mm^2/s$ (25°C) und einem titrierbaren Restamingehalt von 0,002 mεqu./g.

Vergleichsversuch:

Die Arbeitsweise von Beispiel 2 wird wiederholt mit der Abänderung, dass die 1. Stufe des Verfahrens, die Umsetzung mit Ethylencarbonat, nicht durchgeführt wird.
Nach Eindosierung von Diketen ist das zuvor leicht flüssige Öl nach weniger als 1 Minute vergelt.

## Patentansprüche

1. Verfahren zur Herstellung von β-Ketocarbonyl-funktionellen Organosiliciumverbindungen, indem in einer 1. Stufe

   (1) Organosiliciumverbindungen, die mindestens einen SiC-gebundenen organischen Rest mit einer primären Aminogruppe enthalten, mit
   (2) organischen Ester-Verbindungen, vorzugsweise cyclischen organischen Carbonaten und Lactonen, die eine Gruppe der Formel

   -O-C(=O)-

   enthalten, umgesetzt werden
   und in einer 2. Stufe
   die in der 1. Stufe erhaltenen Umsetzungsprodukte aus (1) und (2) anschließend mit
   (3) Diketenen oder Diketenderivaten umgesetzt werden.

2. Verfahren nach Anspruch 1, **dadurch gekennzeichnet, dass** als Organosiliciumverbindungen (1) solche, die mindestens einen SiC-gebundenen organischen Rest **A** der allgemeinen Formel

$$-R^1(-NR^2-R^1)_x-NH_2 \qquad (I),$$

enthalten, wobei

$R^1$ einen zweiwertigen organischen Rest mit 1 bis 18 Kohlenstoffatomen bedeutet,
$R^2$ ein Wasserstoffatom oder einen einwertigen organischen Rest mit 1 bis 18 Kohlenstoffatomen bedeutet,
x 0 oder eine ganze Zahl von 1 bis 10, vorzugsweise 0, 1 oder 2 ist,

eingesetzt werden.

3. Verfahren nach Anspruch 1 oder 2, **dadurch gekennzeichnet, dass** als Organosiliciumverbindungen (1) Organopolysiloxane aus Einheiten der allgemeinen Formel

$$A_aR_b(OR^3)_cSiO_{\frac{4-(a+b+c)}{2}} \qquad (II),$$

wobei A die oben dafür angegebene Bedeutung hat,
R einen einwertigen, gegebenenfalls substituierten Kohlenwasserstoffrest mit 1 bis 18 Kohlenstoffatomen je Rest bedeutet,
$R^3$ ein Wasserstoffatom oder einen Alkylrest mit 1 bis 8 Kohlenstoffatomen bedeutet,
a 0 oder 1,
b 0, 1, 2 oder 3 und
c 0 oder 1 ist,
mit der Maßgabe, dass die Summe $a+b+c \leq 3$ ist und durchschnittlich mindestens ein Rest A je Molekül enthalten ist, eingesetzt werden.

4. Verfahren nach einem der Ansprüche 1 bis 3, **dadurch gekennzeichnet, dass** als Organosiliciumverbindungen (1) Organopolysiloxane der allgemeinen Formel

$$A_gR_{3-g}SiO(SiR_2O)_l(SiRAO)_kSiR_{3-g}A_g \qquad (IIIa)$$

oder

$$(R^3O)R_2SiO(SiR_2O)_n(SiRAO)_mSiR_2(OR^3) \qquad (IIIb)$$

wobei A, R und $R^3$ die oben dafür angegebene Bedeutung haben,
g 0 oder 1,
k 0 oder eine ganze Zahl von 1 bis 30 ist und
l 0 oder eine ganze Zahl von 1 bis 1000 ist,
m eine ganze Zahl von 1 bis 30 ist und
n 0 oder eine ganze Zahl von 1 bis 1000 ist,
mit der Maßgabe, dass durchschnittlich mindestens ein Rest A je Molekül enthalten ist.

5. Verfahren nach einem der Ansprüche 1 bis 4, **dadurch gekennzeichnet, dass** als organische Ester-Verbindungen (2) Lactone oder Cyclocarbonate der allgemeinen Formel

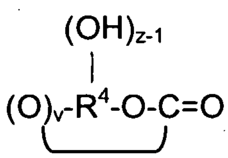
(V),

wobei $R^4$ einen zwei- oder dreiwertigen Kohlenwasserstoffrest mit 1 bis 18 Kohlenstoffatomen, der gegebenenfalls

durch ein oder mehrere separate Sauerstoffatome unterbrochen ist, v 0 oder 1 ist und z 1 oder 2 ist, eingesetzt werden.

6. Verfahren nach einem der Ansprüche 1 bis 5, **dadurch gekennzeichnet, dass** als Diketene (3) solche der allgemeinen Formel

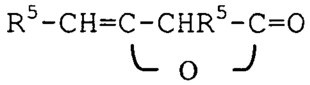 (VII),

wobei
$R^5$ ein Wasserstoffatom oder einen Kohlenwasserstoffrest mit 1 bis 18 Kohlenstoffatomen bedeutet, eingesetzt werden.

7. β-Ketocarbonyl-funktionellen Organosiliciumverbindungen, die mindestens einen SiC-gebundenen organischen Rest G ausgewählt aus der Gruppe der Reste $G^1$ und $G^2$ enthalten, wobei $\mathbf{G^1}$ ein Rest der allgemeinen Formel

$$-R^1\{-N[C(=O)-CHR^5-C(=0)-CH_2R^5]-R^1\}_x-NH-C(=O)-(O)_v-R^4\{-O[-C(=O)-CHR^5-C(=O)-CHR^5]_y-H\}_z \quad (VIII),$$

und $\mathbf{G^2}$ ein Rest der allgemeinen Formel

$$-R^1(-NR^{2'}-R^1)_x-NH-C(=O)-(O)_v-R^4\{-O[-C(=O)-CHR^5-C(=O)-CHR^5]_y-H\}_z \quad (IX),$$

bedeutet, wobei
$R^1$, $R^2$, $R^4$, $R^5$, v und x die im Anspruch 2, 5 und 6 dafür angegebene Bedeutung haben,
$R^{2'}$ die Bedeutung von $R^2$ hat mit der Maßgabe, dass $R^{2'}$ kein Wasserstoffatom ist,
$R^{2'}$ ein einwertiger organischer Reste mit 1 bis 18 Kohlenstoffatomen bedeutet,
y 0 oder 1,
z 1 oder 2,
mit der Maßgabe, dass bei mindestens einem Teil der β-Ketocarbonyl-funktionellen Organosiliciumverbindungen y gleich 1 ist.

8. β-Ketocarbonyl-funktionellen Organosiliciumverbindungen nach Anspruch 7, **dadurch gekennzeichnet, dass** $R^4$ ein Rest der Formel $-CH_2CH_2-$, $R^5$ ein Wasserstoffatom, v 1 und z 1 ist.

9. β-Ketocarbonyl-funktionellen Organosiliciumverbindungen nach Anspruch 7 oder 8, **dadurch gekennzeichnet, dass** es Organopolysiloxane aus Einheiten der allgemeinen Formel

$$G_aR_b(OR^3)_cSiO_{\frac{4-(a+b+c)}{2}} \quad (X)$$

sind, wobei
**G** ein Rest ausgewählt aus der Gruppe der Reste $G^1$ und $G^2$ ist, wobei $G^1$ und $G^2$ die im Anspruch 7 dafür angegebene Bedeutung haben und
R, $R^3$, a, b und c die im Anspruch 3 dafür angegebene Bedeutung haben,
mit der Maßgabe, dass die Summe $a+b+c \leq 3$ ist und
durchschnittlich mindestens ein Rest G je Molekül enthalten ist.

10. β-Ketocarbonyl-funktionellen Organosiliciumverbindungen nach Anspruch 7, 8 oder 9, **dadurch gekennzeichnet, dass** es Organopolysiloxane der allgemeinen Formel

$$G_gR_{3-g}SiO(SiR_2O)_l(SiRGO)_kSiR_{3-g}G_g \quad (IIIa)$$

oder

$$(R^3O)R_2SiO(SiR_2O)_n(SiRCO)_mSiR_2(OR^3) \qquad (IIIb)$$

sind, wobei G, R und $R^3$ die im Anspruch 8 dafür angegebene Bedeutung haben,
g 0 oder 1,
k 0 oder eine ganze Zahl von 1 bis 30 ist und
l 0 oder eine ganze Zahl von 1 bis 1000 ist,
m eine ganze Zahl von 1 bis 30 ist und
n 0 oder eine ganze Zahl von 1 bis 1000 ist,
mit der Maßgabe, dass durchschnittlich mindestens ein Rest G je Molekül enthalten ist.

## Claims

**1.** Process for preparing β-ketocarbonyl-functional organosilicon compounds, wherein, in a 1st step,

(1) organosilicon compounds containing at least one SiC-bonded organic radical having a primary amino group are reacted with
(2) organic ester compounds, preferably cyclic organic carbonates and lactones, containing a group of the formula

$$-O-C(=O)-$$

and, in a 2nd step,
the reaction products of (1) and (2) obtained in the 1st step are subsequently reacted with
(3) diketenes or diketene derivatives.

**2.** Process according to claim 1, **characterized in that** organosilicon compounds containing at least one SiC-bonded organic radical **A** of the general formula

$$-R^1(-NR^2-R^1)_x-NH_2 \qquad (I),$$

where
$R^1$ is a divalent organic radical having from 1 to 18 carbon atoms,
$R^2$ is a hydrogen atom or a monovalent organic radical having from 1 to 18 carbon atoms,
x is 0 or an integer from 1 to 10, preferably 0, 1 or 2,
are used as organosilicon compounds (1).

**3.** Process according to claim 1 or 2, **characterized in that** organopolysiloxanes comprising units of the general formula

$$A_aR_b(OR^3)_cSiO_{\frac{4-(a+b+c)}{2}} \qquad (II),$$

where A is as defined above,
R is a monovalent, substituted or unsubstituted hydrocarbon radical having from 1 to 18 carbon atoms per radical,
$R^3$ is a hydrogen atom or an alkyl radical having from 1 to 8 carbon atoms,
a is 0 or 1,
b is 0, 1, 2 or 3 and
c is 0 or 1,
with the proviso that the sum a+b+c is ≤ 3 and on average at least one radical A is present per molecule,
are used as organosilicon compounds (1).

**4.** Process according to any of claims 1 to 3, **characterized in that** organopolysiloxanes of the general formula

$$A_gR_{3-g}SiO(SiR_2O)_l(SiRAO)_kSiR_{3-g}A_g \qquad (IIIa)$$

or

$$(R^3O)R_2SiO(SiR_2O)_n(SiRAO)_mSiR_2(OR^3) \qquad \text{(IIIb)}$$

where A, R and $R^3$ are as defined above,
g is 0 or 1,
k is 0 or an integer from 1 to 30 and
l is 0 or an integer from 1 to 1000,
m is an integer from 1 to 30 and
n is 0 or an integer from 1 to 1000,
with the proviso that on average at least one radical A is present per molecule, are used as organosilicon compounds (1).

**5.** Process according to any of claims 1 to 4,
**characterized in that**
lactones or cyclocarbonates of the general formula

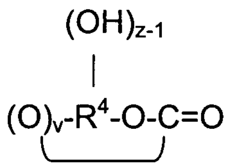
(V),

where $R^4$ is a divalent or trivalent hydrocarbon radical which has from 1 to 18 carbon atoms and may be interrupted by one or more separate oxygen atoms,
v is 0 or 1, and
z is 1 or 2,
are used as organic ester compounds (2).

**6.** Process according to any of claims 1 to 5, **characterized in that** diketenes of the general formula

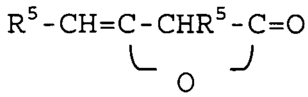
(VII),

where
$R^5$ is a hydrogen atom or a hydrocarbon radical having from 1 to 18 carbon atoms, are used as diketenes (3).

**7.** β-Ketocarbonyl-functional organosilicon compounds containing at least one SiC-bonded organic radical **G** selected from the group consisting of the radicals $G^1$ and $G^2$, where $\mathbf{G^1}$ is a radical of the general formula

$$-R^1\{-N[C(=O)-CHR^5-C(=O)-CH_2R^5]-R^1\}_x-NH-C(=O)-(O)_v-R^4\{-O[-C(=O)-CHR^5-C(=O)-CHR^5]_y-H\}_z \qquad \text{(VIII)},$$

and $\mathbf{G^2}$ is a radical of the general formula

$$-R^1(-NR^{2'}-R^1)_x-NH-C(=O)-(O)_v-R^4\{-O[-C(=O)-CHR^5-C(=O)-CHR^5]_y-H\}_z \qquad \text{(IX)},$$

where
$R^1$, $R^2$, $R^4$, $R^5$, v and x are as defined in claims 2, 5 and 6,
$R^{2'}$ has one of the meanings of $R^2$ with the proviso that $R^{2'}$ is not a hydrogen atom,
$R^{2'}$ is a monovalent organic radical having from 1 to 18 carbon atoms,

y is 0 or 1,
z is 1 or 2,
with the proviso that y is 1 in at least one part of the β-ketocarbonyl-functional organosilicon compounds.

**8.** β-Ketocarbonyl-functional organosilicon compounds according to claim 7, **characterized in that** $R^4$ is a radical of the formula $-CH_2CH_2-$, $R^5$ is a hydrogen atom, v is 1 and z is 1.

**9.** β-Ketocarbonyl-functional organosilicon compounds according to claim 7 or 8, **characterized in that** they are organopolysiloxanes comprising units of the general formula

$$G_aR_b(OR^3)_cSiO_{\frac{4-(a+b+c)}{2}} \qquad (X)$$

where
**G** is a radical selected from the group consisting of the radicals $G^1$ and $G^2$, where $G^1$ and $G^2$ are as defined in claim 7 and
R, $R^3$, a, b and c are as defined in claim 3,
with the proviso that the sum a+b+c is ≤ 3 and on average at least one radical G is present per molecule.

**10.** β-Ketocarbonyl-functional organosilicon compounds according to claim 7, 8 or 9, **characterized in that** they are organopolysiloxanes of the general formula

$$G_gR_{3-g}SiO(SiR_2O)_l(SiRGO)_kSiR_{3-g}G_g \qquad (IIIa)$$

or

$$(R^3O)R_2SiO(SiR_2O)_n(SiRCO)_mSiR_2\,(OR^3) \qquad (IIIb)$$

where G, R and $R^3$ are as defined in claim 8,
g is 0 or 1,
k is 0 or an integer from 1 to 30 and
l is 0 or an integer from 1 to 1000,
m is an integer from 1 to 30 and
n is 0 or an integer from 1 to 1000,
with the proviso that on average at least one radical G is present per molecule.

## Revendications

**1.** Procédé de préparation de composés d'organosilicium à fonction β-cétocarbonyle, dans lequel
lors d'une première étape,

(1) des composés d'organosilicium contenant au moins un radical organique relié à SiC comportant un groupe amino primaire sont mis en réaction avec
(2) des composés esters organiques, de préférence des carbonates organiques cycliques et des lactones, contenant un groupe de formule

$$-O-C(=O)-$$

et, lors d'une seconde étape
les produits de la réaction de (1) et (2) obtenus lors de la première étape sont ensuite mis en réaction avec
(3) des dicétènes ou des dérivés de dicétènes.

**2.** Procédé selon la revendication 1, dans lequel des composés d'organosilicium contenant au moins un radical organique A relié à SiC de formule générale

$$-R^1(-NR^2-R^1)_x-NH_2 \qquad (I)$$

dans laquelle
$R^1$ est un radical organique bivalent comportant 1 à 18 atomes de carbone,
$R^2$ est un atome d'hydrogène ou un radical organique monovalent comportant 1 à 18 atomes de carbone,
x est 0 ou un entier de 1 à 10, de préférence 0, 1 ou 2,
sont utilisés en tant que composés d'organosilicium (1).

**3.** Procédé selon la revendication 1 ou 2, dans lequel des organopolysiloxanes comprenant des unités de formule générale

$$A_aR_b(OR^3)_cSiO_{\frac{4-(a+b+c)}{2}} \qquad (II)$$

dans laquelle A est tel que défini ci-dessus,
R est un radical hydrocarboné monovalent, substitué ou non substitué, comportant 1 à 18 atomes de carbone par radical,
$R^3$ est un atome d'hydrogène ou un radical alkyle comportant 1 à 8 atomes de carbone,
a est 0 ou 1,
b est 0, 1, 2 ou 3 et
c est 0 ou 1,
à condition que la somme a+b+c soit ≤ 3 et qu'en moyenne au moins un radical A soit présent par molécule,
sont utilisés en tant que composés d'organosilicium (1).

**4.** Procédé selon l'une quelconque des revendications 1 à 3, dans lequel des organopolysiloxanes des formules générales

$$A_gR_{3-g}SiO(SiR_2O)_l(SiRAO)_kSiR_{3-g}A_g \qquad (IIIa)$$

ou

$$(R^3O)R_2SiO(SiR_2O)_n(SiRAO)_mSiR_2(OR^3) \qquad (IIIb)$$

dans lesquelles A, R et $R^3$ sont tels que définis ci-dessus,
g est 0 ou 1,
k est 0 ou un entier de 1 à 30 et
l est 0 ou un entier de 1 à 1 000,
m est un entier de 1 à 30 et
n est 0 ou un entier de 1 à 1 000,
à condition qu'en moyenne au moins un radical A soit présent par molécule,
sont utilisés en tant que composés d'organosilicium (1).

**5.** Procédé selon l'une quelconque des revendications 1 à 4, dans lequel des lactones ou des cyclocarbonates de formule générale

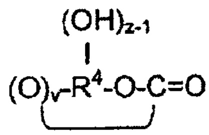 (V),

dans laquelle $R^4$ est un radical hydrocarboné bivalent ou trivalent qui comprend 1 à 18 atomes de carbone et peut être interrompu par un ou plusieurs atomes d'oxygène séparés,
v est 0 ou 1 et
z est 1 ou 2,
sont utilisés en tant que composés esters organiques (2).

**6.** Procédé selon l'une quelconque des revendications 1 à 5, dans lequel des dicétènes de formule générale

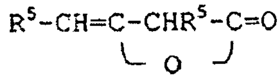

(VII),

dans laquelle
$R^5$ est un atome d'hydrogène ou un radical hydrocarboné comportant 1 à 18 atomes de carbone,
sont utilisés en tant que dicétènes (3).

**7.** Composé d'organosilicium à fonction β-cétocarbonyle contenant au moins un radical organique G relié à SiC choisi dans le groupe constitué des radicaux $G^1$ et $G^2$, $G^1$ étant un radical de formule générale

$$-R^1\{-N[C(=O)-CHR^5-C(=O)-CH_2R^5]-R^1\}_x-NH-C(=O)-(O)_v-R^4\{-O[-C(=O)-CHR^5-C(=O)-CHR^5]_y-H\}_z \quad \text{(VIII)}$$

et $G^2$ est un radical de formule générale

$$-R^1(-NR^{2'}-R^1)_x-NH-C(=O)-(O)_v-R^4\{-O[-C(=O)-CHR^5-C(=O)-CHR^5]_y-H\}_z \quad \text{(IX)},$$

dans lesquelles $R^1$, $R^2$, $R^4$, $R^5$, v et x sont tels que définis dans les revendications 2, 5 et 6, $R^{2'}$ a une des significations de $R^2$ à condition que $R^{2'}$ ne soit pas un atome d'hydrogène,
$R^{2'}$ est un radical organique monovalent comportant 1 à 18 atomes de carbone,
y est 0 ou 1,
z est 1 ou 2,
à condition que y soit 1 dans au moins une partie des composés d'organosilicium à fonction β-cétocarbonyle.

**8.** Composé d'organosilicium à fonction β-cétocarbonyle selon la revendication 7, dans lequel $R^4$ est un radical de formule $-CH_2CH_2-$, $R^5$ est un atome d'hydrogène, v est 1 et z est 1.

**9.** Composé d'organosilicium à fonction β-cétocarbonyle selon la revendication 7 ou 8, qui est un organopolysiloxane comportant des unités de formule générale

$$G_aR_b(OR^3)_cSiO_{\frac{4-(a+b+c)}{2}} \quad \text{(X)}$$

dans laquelle G est un radical choisi dans le groupe constitué des radicaux $G^1$ et $G^2$, $G^1$ et $G^2$ étant tels que définis dans la revendication 7 et
R, $R^3$, a, b et c sont tels que définis dans la revendication 3,
à condition que la somme a+b+c soit ≤ 3 et qu'en moyenne au moins un radical G soit présent par molécule.

**10.** Composé d'organosilicium à fonction β-cétocarbonyle selon la revendication 7, 8 ou 9, qui est un organopolysiloxane de formule générale

$$G_gR_{3-g}SiO(SiR_2O)_l(SiRGO)_kSiR_{3-g}G_g \quad \text{(IIIa)}$$

ou

$$(R^3O)R_2SiO(SiR_2O)_n(SiRCO)_mSiR_2(OR^3) \quad \text{(IIIb)}$$

dans laquelle G, R et $R^3$ sont tels que définis dans la revendication 8,
g est 0 ou 1,
k est 0 ou un entier de 1 à 30 et
l est 0 ou un entier de 1 à 1 000,

m est un entier de 1 à 30 et
n est 0 ou un entier de 1 à 1 000,
à condition qu'en moyenne au moins un radical G soit présent par molécule.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4861839 A
- US 4808649 A
- US 5952443 A
- US 6121404 A